Europäisches Patentamt

European Patent Office

Office européen des brevets

(19)

(11) Numéro de publication : **0 337 894 B1**

(12)

# FASCICULE DE BREVET EUROPEEN

(45) Date de publication du fascicule du brevet :
17.06.92 Bulletin 92/25

(51) Int. Cl.⁵ : **F01L 1/34, F16H 7/08**

(21) Numéro de dépôt : **89401043.8**

(22) Date de dépôt : **14.04.89**

(54) **Dispositif de réglage du calage angulaire d'un arbre mené par rapport à un arbre menant.**

(30) Priorité : **14.04.88 FR 8804956**

(43) Date de publication de la demande :
**18.10.89 Bulletin 89/42**

(45) Mention de la délivrance du brevet :
**17.06.92 Bulletin 92/25**

(84) Etats contractants désignés :
**DE ES FR GB IT**

(56) Documents cités :
**EP-A- 0 195 945**
**DE-A- 1 964 005**
**DE-A- 3 506 107**
**DE-A- 3 509 094**
**US-A- 3 888 217**

(73) Titulaire : **SACHS INDUSTRIES S.A. (HURET
ET MAILLARD REUNIS)**
**60 Avenue Félix-Faure**
**F-92000 Nanterre (FR)**

(72) Inventeur : **Ingold, Alain François Claude**
**8 Rue Cernuschi**
**F-75017 Paris (FR)**

(74) Mandataire : **Polus, Camille et al**
**c/o Cabinet Lavoix 2, Place d'Estienne d'Orves**
**F-75441 Paris Cedex 09 (FR)**

EP 0 337 894 B1

Jouve, 18, rue Saint-Denis, 75001 PARIS

# Description

La présente invention a pour objet un dispositif de réglage du calage angulaire d'au moins un arbre mené par rapport à un arbre menant dans un moteur à explosion ou à combustion interne.

Dans un moteur à explosion ou à combustion interne il est nécessaire lors de son fonctionnement d'assurer un synchronisme notamment de la commande de l'ouverture et de la fermeture des soupapes et/ou de l'injection avec le mouvement des pistons. Ce synchronisme est généralement obtenu à l'aide d'une chaîne dite chaîne de distribution qui, entraînée en rotation par un pignon solidaire du vilebrequin, entraîne elle-même soit un arbre à cames assurant l'ouverture et le fermeture des soupapes, soit un élément d'une pompe d'injection.

Un tendeur de chaîne assure la tension de la chaîne et le rattrapage du jeu dû à l'usure.

On sait par ailleurs qu'il est utile de pouvoir faire varier le calage angulaire des arbres menés par rapport à l'arbre menant en fonction du régime moteur. Une telle variation permet d'améliorer le rendement et de réduire la pollution due à une évacuation de gaz incomplètement brûlés.

Le réglage du calage angulaire de l'arbre commandant l'ouverture et la fermeture des soupapes trouve certaines solutions dans l'art antérieur et plus particulièrement dans le brevet français 2529617 qui prévoit pour le calage de la distribution et/ou de l'injection, un arbre dont la position angulaire peut être réglée à l'aide d'un train de pignons à dentures obliques engrènant entre eux.

Dans d'autres dispositifs, le pignon d'entraînement de l'arbre à cames est constitué d'un moyeu solidaire de l'arbre à cames et d'une couronne dentée dissociée du moyeu et reliée à ce dernier soit par un coupleur hydraulique soit par un mécanisme à pignons planétaires de façon pouvoir réaliser un décalage angulaire entre cette même couronne dentée et le moyeu solidaire de l'arbre.

Le brevet DE-A-3.509.094 décrit un dispositif d'entraînement d'au moins un arbre mené 3, 4 à partir d'un arbre menant 2, comprenant un lien de transmission à boucle fermée de longueur constante délimitant un brin mou sur lequel agit un premier tendeur et au moins un brin tendu sur lequel agit un tendeur correspondant, les tendeurs étant des tendeurs hydrauliques comportant chacun une chambre 21 alimentée par un fluide de commande sous pression car l'intermédiaire de conduites 22, 23 ou 24.

Le calage angulaire varie en fonction du volume de fluide sous pression contenu dans les différentes chambres. Ceci implique qu'au moins une chambre puisse se vider. Bien que la façon dont cette vidange est réalisée ne soit pas détaillée dans le brevet DE-A-3.509.094, il est évident que celle-ci doit se faire.

Le fait qu'une seule conduite relie la source de fluide sous pression à chacune des chambres entraîne un dispositif complexe de commande des alimentations en fluide, dont le fonctionnement est peu fiable.

Ces dispositifs connus présentent de nombreux inconvénients parmi lesquels la complexité qui les rend peu fiables et d'un prix de revient élevé. De plus leur encombrement est important alors que les endroits dans lesquels ils doivent être situés sont exigüs.

De tels dispositifs présentent également un inconvénient important, celui d'être difficile à piloter. En effet ils permettent de faire varier le calage de l'arbre mené par rapport à l'arbre menant entre deux. positions extrêmes sans qu'il soit possible d'obtenir des positions intermédiaires.

La présente invention a pour but de proposer un procédé de réglage du calage angulaire d'au moins un arbre mené entraîné en rotation par un arbre menant dans un moteur à combustion interne qui soit d'une construction simple, d'un fonctionnement fiable et pallie par conséquent les inconvénients des dispositifs existants.

A cet effet, l'invention a pour objet un dispositif d'entraînement d'au moins un arbre mené, à partir d'un arbre menant, comprenant un lien de transmission à boucle fermée de longueur constante délimitant un brin mou sur lequel agit un premier tendeur et au moins un brin tendu sur lequel agit un tendeur correspondant, caractérisé en ce que les tendeurs sont des tendeurs hydrauliques à clapet comportant chacun une chambre alimentée en continu par un fluide de commande sous pression et munie de moyens de purge commandés par une unité de commande séquentielle pour faire varier le calage angulaire de l'arbre mené par rapport à l'arbre menant.

Un tel dispositif permet d'obtenir un ré-glage du calage angulaire notamment d'un arbre à cames par rapport au vilebrequin dans un moteur à explosion ou à combustion interne d'une façon simple fiable précise et peu encombrante car le dispositif est situé entre les différents arbres tournants.

Selon d'autres caractéristiques :

– les moyens de purge de chaque tendeur comportent une électrovanne EV en aval d'une sortie de la chambre et un étranglement variable R situé en aval de l'électrovanne et en amont d'un réservoir de purge.

– l'unité de commande comporte une entrée reliée à des capteurs de paramètres de fonctionnement du moteur, un microprocesseur et une sortie émettant des signaux de commande aux moyens de purge.

– l'unité de commande envoie de manière séquentielle des signaux de commande aux moyens de purge, qui ouvrent tout d'abord l'électrovanne EV1 du/des brins à raccourcir puis en fermant l'électrovanne EV2 du/des brins à allonger puis en refermant les électrovannes précédemment ouvertes pour bloquer le calage dans la position désirée, et en réglant pendant la séquence d'ouverture le/les étranglements pour régler la vitesse de raccourcissement du/des brins à raccourcir.

– les capteurs reliés à l'unité de commande comprennent des capteurs de couple, vitesse, pression dans la pipe d'admission, température des gaz d'échappement, teneur en oxyde d'azote ou autres.

– l'arbre mené A1 est un arbre à cames ou un arbre d'entraînement en rotation d'une pompe à injection.

– le lien en boucle fermée est une chaîne à rouleaux coopérant avec des roues dentées portées par les arbres A.

– le lien en boucle fermée de longueur constante est une courroie coopérant avec des poulies.

– la courroie est crantée et les poulies sont crantées.

– le fluide sous pression de commande des tendeurs est le lubrifiant sous pression du moteur et la purge s'effectue par retour au carter d'un moteur à explosion ou à combustion interne.

– le fluide de pression de commande des tendeurs est un fluide distinct du lubrifiant moteur et la purge s'effectue par retour à un carter indépendant du moteur à explosion ou à combustion interne.

L'invention va être décrite ci-dessous plus en détail en se référant aux dessins annexés sur lesquels :

– la Fig.1 représente un dispositif comportant un arbre mené et un arbre menant entraînés par un même lien de longueur constante tel qu'il est connu de l'art antérieur ;

– la Fig.2 représente schématiquement, dans une première position, un dispositif de réglage du calage angulaire d'un arbre mené par rapport à un arbre menant, selon l'invention ;

– la Fig.3 représente un tel dispositif dans un autre position ;

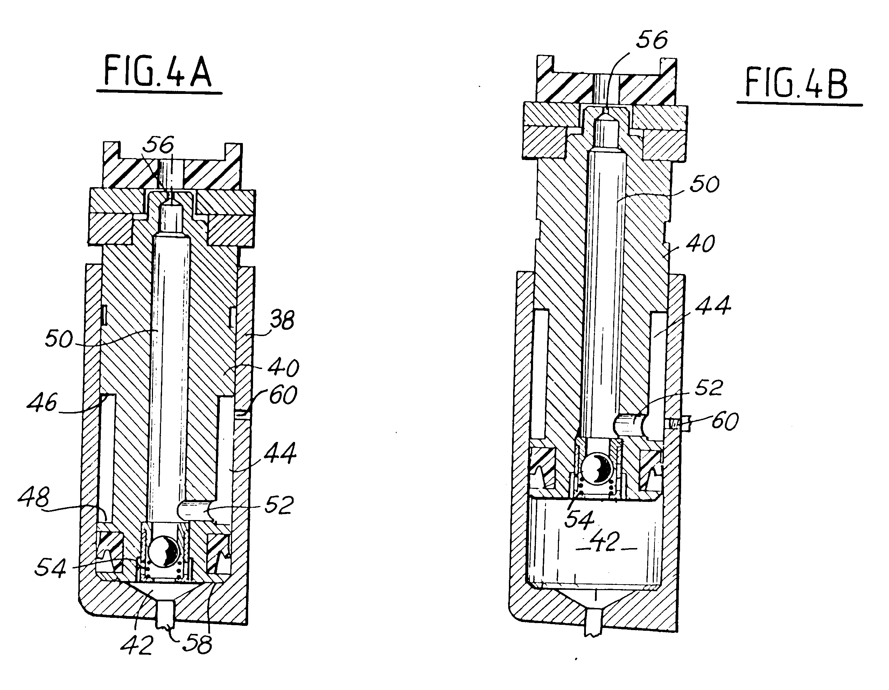

– les Fig.4A et 4B représentent une vue en coupe d'un tendeur à clapet respectivement dans une position de repos et une position de travail, tel qu'il est utilisé dans l'invention ;

– la Fig.5 représente une charte des séquences pour le pilotage d'un dispositif à un arbre mené et à un arbre menant selon l'invention ;

– la Fig.6 représente un dispositif selon l'invention à deux arbres menés et un arbre menant et son circuit hydraulique associé ; et

– la Fig.7 représente un dispositif à trois arbres menés et un arbre menant et le dispositif hydraulique associé ;

– la Fig.8 représente schématiquement les éléments composant la commande électronique des moyens de purge ;

– les Figs.9A et 9B représentent les changements de position des électrovannes EV1 et EV2 et des tendeurs T1 et T2 dans deux séquences de décalage du calage angulaire de l'arbre mené par rapport à l'arbre menant ;

– la Fig.10 représente l'organigramme décrivant le fonctionnement du programme du microprocesseur contenu dans la commande électronique des moyens de purge.

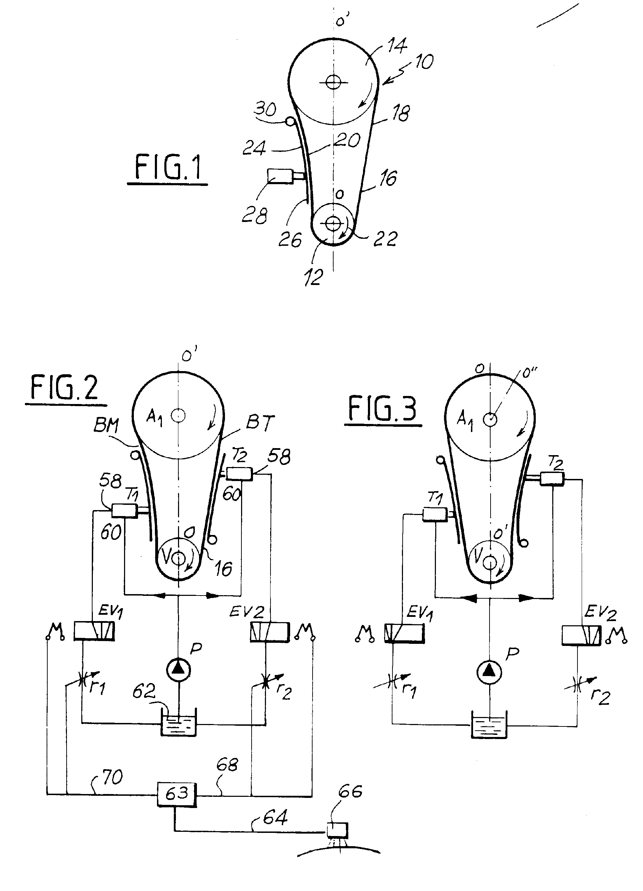

Sur la Fig.1, on a représenté un dispositif d'entraînement en rotation d'un arbre à cames pour l'ouverture et la fermeture des soupapes dans un moteur à explosion tel qu'il est connu dans l'art antérieur. Ce dispositif 10 comprend un arbre menant 12 en l'occurence le vilebrequin coopérant avec une chaîne 16 de façon à entraîner un arbre mené 14 en l'occurence l'arbre à cames. Cet entraînement s'effectue par l'intermédiaire de pignons solidaires des arbres mais par simplification, on désignera par une seule référence l'arbre et le pignon qui en est solidaire.

Dans ce dispositif la portion de chaîne 18 en amont du vilebrequin par rapport au sens de rotation symbolisé par la flèche 22, travaille en traction et il est appelé brin tendu. La portion de chaîne 20 située en aval du vilebrequin est appelée le brin mou.

Un système de tension de chaîne 24 constitué d'un patin 26 pressé contre le brin mou de la chaîne par un vérin 28 assure le rattrapage du jeu initial et celui dû à l'usure. Le patin 26 peut être constitué par une lame montée en rotation par rapport à un axe 30 de façon à exercer un effet de levier.

Pour la suite de la description on appellera tendeur le vérin 28 en faisant abstraction du patin 26.

Sur cette même figure on a désigné par O et O' la position de repères portés par les arbres 12 et 14. On constate que dans ce dispositif la mise en rotation du vilebrequin 12 entraîne la chaîne qui elle-même met en rotation l'arbre à cames 14, ce type de transmission assurant un parfait synchronisme mais un calage fixe de la position angulaire de l'arbre à cames en fonction de la position angulaire du vilebrequin.

A la Fig.2, on a représenté un dispositif 32 selon l'invention qui comprend un vilebrequin V, un arbre mené A1, une chaîne 16 comportant un brin mou BM et un brin tendu BT. Ce dispositif comprend également un tendeur T1 coopérant avec le brin mou ainsi qu'un deuxième tendeur T2 coopérant avec le brin tendu BT.

On a représenté aux Fig.2 et 3 les positions respectivement initiales et avec décalage angulaire maximum ainsi que le circuit hydraulique correspondant.

Le circuit hydraulique comprend une alimentation en fluide sous pression à l'aide de la pompe à huile P du moteur à explosion telle qu'elle est connue de l'art antérieur. L'huile sous pression entre donc dans les tendeurs T1 et T2 par les alimentations 60. En aval des tendeurs, on dispose des électrovannes EV1 et EV2 puis en aval de ces mêmes électrovannes on dispose des étrangleurs R1 et R2. En sortie de ces étrangleurs le fluide retourne dans le carter d'huile 62 situé en amont de la pompe à huile P.

Préalablement il est nécessaire de décrire le type de tendeur utilisé.

Un tel tendeur a été décrit en détail dans la demande de brevet EP-A-0 280 600 au nom de la Demanderesse , déposée antérieurement à la présente demande mais publiée postérieurement au dépôt de cette dernière.

Un tel tendeur comprend un corps de vérin 38 dans lequel coulisse un piston 40 de façon à définir une chambre 42. Le piston 40 comprend un double lamage 46 et 48 de façon à définir avec la paroi interne du corps 38 une chambre 44. Le piston comporte en outre un canal central et longitudinal 50 en communication avec ladite chambre 44 par un orifice 52. A l'extrémité inférieure du piston qui définit avec le corps 38 la chambre 42 on a disposé un clapet 54 qui permet de contrôler le passage entre le canal longitudinal 50 et la chambre 42. Ce clapet 54 est destiné à permettre le passage du canal 50 à la chambre 42 tout en assurant la fermeture dans le sens de circulation opposé.

A l'autre extrémité du canal 50 il est prévu un alésage débouchant 56 permettant une fuite d'huile et donc simultanément la lubrification de la chaine.

D'autre part le corps du vérin 38 est muni à sa partie inférieure d'une sortie 58.

Ce corps 38 de vérin comporte également un orifice 60 assurant l'alimentation en fluide sous pression de la chambre 44.

Le fonctionnement de ce dispositif hydraulique est le suivant : dans l'état du dispositif représenté à la Fig.2, la pompe à huile alimente en pression les chambres 42 des tendeurs T1 et T2 et les électrovannes EV1 et EV2 sont respectivement dans des positions fermée et ouverte. Ainsi la chambre 42 du tendeur T1 est à la pression fournie. Ainsi la chambre 42 du tendeur T1 est à la pression fournie par la pompe P tandis que la chambre 42 du tendeur T2 est sensiblement à la pression atmosphérique puisque l'électrovanne EV2 est ouverte et permet l'évacuation du fluide envoyé par la pompe vers le carter moteur 62.

Les étrangleurs R1 et R2 sont du type réglables et permettent de faire varier progressivement en fonction de la vitesse du moteur la fuite de pression préalablement établie dans les chambres 42 des tendeurs T1 et T2. Dans la position initiale représentée à la Fig.2, l'étrangleur R2 est en position progressivement ouverte de façon que le tendeur T2 n'exerce pas d'efforts sur le brin tendu BT de la chaîne 16. L'étrangleur R1 est en position progressivement fermée.

A la Fig.3 on a représenté le dispositif dans sa position de variation maximale du calage angulaire entre l'arbre mené A1 et le vilebrequin V.

Afin de permettre au tendeur T2 d'exercer une pression maximum sur le brin tendu BT, il a fallu préalablement faire passer le tendeur T1 en position de retrait. A cet effet le circuit hydraulique ayant les deux tendeurs T1 et T2 alimentés à la pression de sortie de la pompe hydraulique P, les électrovannes EV1 et EV2 sont passées en séquences (EV1 puis EV2) dans des positions inverses de celles représentées à la Fig.2, à savoir l'électrovanne EV1 ouverte et l'électrovanne EV2 fermée. Les étrangleurs R1 et R2 sont alors respectivement dans les positions progressivement ouverte et fermée, l'étrangleur R1 en position progressivement ouverte permet le passage du fluide vers le carter moteur 62.

Le dispositif selon l'invention peut également fonctionner en interractif c'est-à-dire à l'aide d'une unité électronique de commande qui enregistre à l'aide de capteurs un ou plusieurs paramètres de fonctionnement moteur et qui, en fonction de ces paramètres, effectue une variation progressive et constante du déphasage ou décalage angulaire pour répondre au réglage optimum préalablement mémorisé dans cette unité. Lorsque cet optimum est atteint, par exemple pour un calage intermédiaire entre O' et O", l'unité de commande ferme l'électrovanne EV1, ce qui termine la séquence.

Une telle unité électronique de commande est représentée sur cette Fig.2 où elle est référencée 63. Elle reçoit par la liaison 64 les variations du régime moteur enregistrées à l'aide du capteur 66 qui compte tenu de la valeur mémorisée de décalage nécessaire pour un fonctionnement optimum du moteur à combustion interne envoie par les liaisons 68 et 70 les signaux de pilotage des électrovannes EV1, EV2 et des étrangleurs R1 et R2.

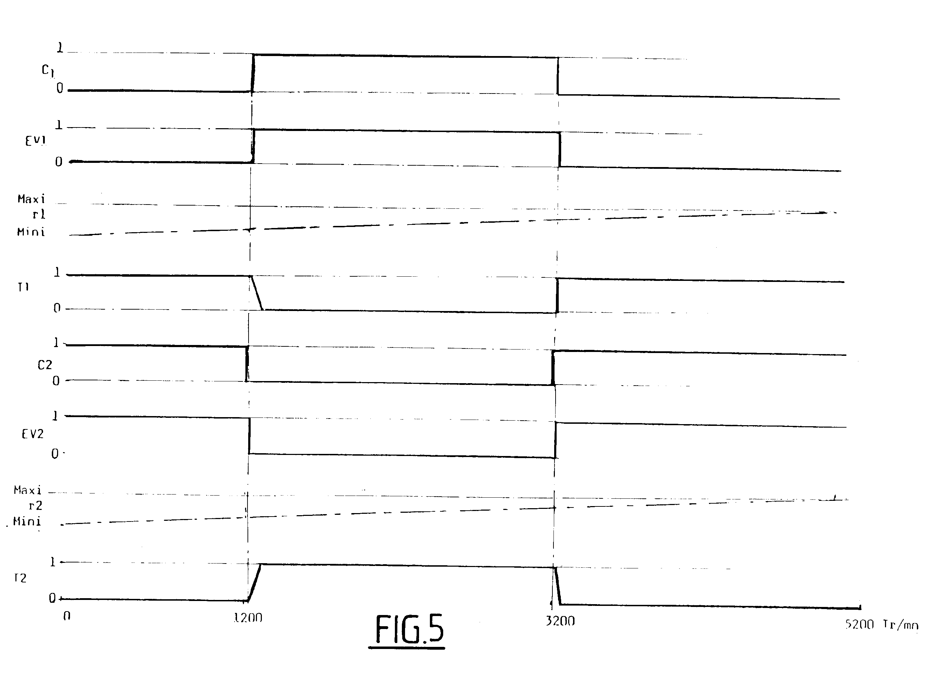

A la Fig.5 on a illustré par un graphique les séquences de fonctionnement des différents éléments du circuit hydraulique à savoir les tendeurs T1 et T2, les étrangleurs R1 et R2, les électrovannes EV1 et EV2 ainsi que la position des contacts électriques qui les commandent. Cette représentation est faite en fonction du régime moteur dans le cas d'un arbre à cames simple directement entraîné par le vilebrequin. Le dispositif comporte donc uniquement deux tendeurs et les éléments hydrauliques associés.

Ainsi que représenté sur le graphique Fig.5 le contact C1 correspond à la commande de l'électrovanne EV1, et ce contact est ouvert tant que le régime moteur est compris par exemple entre 0 et 1200 t/mn, l'électrovanne EV1 se trouve à l'état fermé. Le tendeur reçoit l'intégralité de la pression et se retrouve à l'état 1 c'est-à-dire exerçant un effort sur la chaîne. Quand aux étrangleurs, ils sont a priori à l'état fermé lorsque le moteur est arrêté et totalement ouvert lorsque le moteur est à plein régime 5200 t/mn.

Parallèlement le contact électrique C2 de l'électrovanne EV2 est fermé ce qui conduit à l'ouverture de l'électrovanne et ce qui assure l'évacuation du fluide sous pression de la chambre 42 du tendeur qui n'exerce plus aucune pression par exemple entre 0 et 1200 t/mn, tandis que l'étrangleur assure un très fort ralentissement de la fuite d'huile hors de la chambre du tendeur. A 1200 t/mn par exemple on peut prévoir la fermeture du contact du tendeur T1 ce qui conduit à l'ouverture de l'électrovanne EV1 du tendeur T1, la pression exercée par celui-ci va en diminuant jusqu'à une valeur nulle, l'étrangleur assurant un ralentissement de la fuite de fluide hors de la chambre du tendeur.

D'une façon symétrique et séquentielle le tendeur T2 exerce une pression sur la chaîne de façon à compenser l'action du tendeur T1 et dans ce but le contact C2 est ouvert ce qui ferme l'électrovanne EV2 et qui met la chambre 42 du tendeur T2 en pression. A 1200 t/mn il y a donc une variation du calage angulaire de l'arbre à cames par rapport au vilebrequin, cet arbre à cames conservant ce décalage jusqu'à 3200 t/mn par exemple où l'on revient par exemple aux valeurs de calage initial, c'est-à-dire un décalage nul entre l'arbre à cames et le vilebrequin. Toute autre valeur de décalage ou/et de seuil de vitesse peut être choisie. L'exemple a été volontairement simplifié pour la bonne compréhension. Dans la dernière plage de 3200 t/mn à 5200 t/mn on constate que l'étrangleur a continué à s'ouvrir de façon que le fluide puisse être évacué plus rapidement compte-tenu que les actions des tendeurs sur la chaîne doivent être effectuées dans des plages de temps plus courtes.

La charte illustre les séquences en fonction des vitesses mais pour chaque type de moteur et selon les caractéristiques de rendement qui sont recherchées un réglage du pilotage de l'étrangleur peut être choisi de façon différente pour allier les différents paramètres tels que couple ou vitesse par exemple. De même la plage de variation du déphasage angulaire allant jusqu'à 10° par exemple peut être différente en fonction du type de moteur. Au sein de cette plage, le décalage peut être limité par l'exploitation des signaux issus de l'unité de commande et émis en fonction de paramètre moteur tel que :
– couple, vitesse, pression dans la pipe d'admission, température des gaz d'échappement, teneur en oxyde d'azote etc.

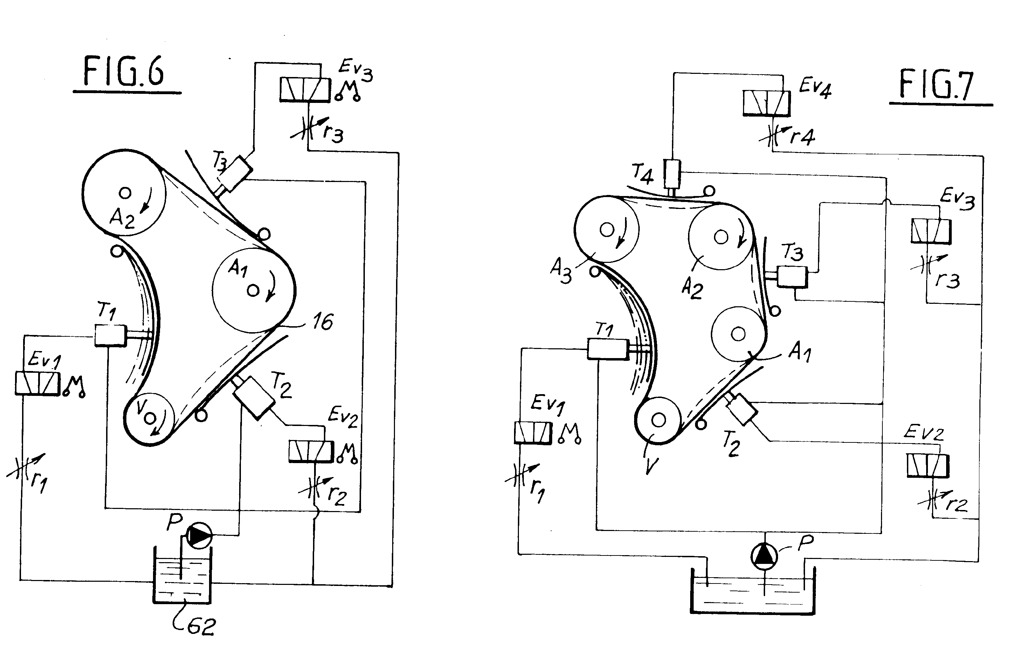

Sur la Fig.6, on a représenté un dispositif selon l'invention comprenant deux arbres menés A1 et A2 entraînés par un même vilebrequin V à l'aide d'une même chaîne 16.

Dans ce dispositif le brin tendu BT1 est défini par la portion de chaîne située entre le vilebrequin V et le premier arbre mené A1 sur lequel agit le tendeur T2. Le deuxième brin tendu BT2 est défini par la portion de chaîne située entre les premier et deuxième arbre mené sur lequel agit le tendeur T3 et la portion de brin mou BM est définie par la portion de chaîne située entre le deuxième arbre mené A2 et le vilebrequin V sur lequel agit le tendeur T1.

Un circuit hydraulique associé comprend pour chaque tendeur une électrovanne EV et un étrangleur R dont l'indice de référence est identique à celui du tendeur. Ainsi que décrits ci-dessus les circuit hydrauliques sont complétés par une pompe à huile P et le carter d'huile moteur 62.

Le fonctionnement de ce dispositif à deux arbres menés entraînés par un même vilebrequin permet plusieurs types de réglage :
– la variation simultanée du calage de deux arbres par rapport au vilebrequin et ceci pour une même valeur d'angle : dans ce cas le tendeur T3 n'intervient pas, seul le tendeur T1 est mis sous pression tandis que le tendeur T2 est relâché de façon à compenser et à maintenir la tension de la chaîne, on augmente donc la longueur du brin tendu BT1 en diminuant la longueur du brin mou BM. Ceci a donc pour effet de faire varier simultanément et d'un même angle dans un même sens le calage des deux arbres menés par rapport au vilebrequin ;
– la variation du calage angulaire du premier arbre mené A1 par rapport au vilebrequin tout en maintenant le calage initial du deuxième arbre mené A2 par rapport à ce même vilebrequin : dans ce cas la longueur du brin mou reste inchangée ainsi que la position du tendeur T1 tandis que l'on agit sur les tendeurs T2 et T3. En effet on agit sur les tendeurs T2 et T3 de façon à augmenter la longueur du brin tendu BT1 et l'on diminue la longueur du brin tendu BT2 ce qui provoque un décalage angulaire du premier arbre mené par rapport au vilebrequin sans modification du réglage du deuxième arbre mené A2 ;
– la variation du calage angulaire du deuxième arbre mené A2 par rapport au vilebrequin sans modification du calage initial du premier arbre mené A1 : dans ce cas seuls les tendeurs T1 et T3 interviennent, le tendeur T3 est mis en pression pour augmenter la longueur du brin tendu BT2 et le tendeur T1 voit sa pression diminuée de façon à diminuer la longueur du brin mou BM. Ainsi l'arbre mené A2 subit un décalage angulaire sans que le premier arbre A1 mené ne subisse de décalage par rapport à son calage initial ;
– la variation simultanée du calage des deux arbres menés A1, A2 par rapport au vilebrequin, d'une valeur différente pour chacun des deux arbres menés : dans ce cas les trois tendeurs sont actionnés de façon que les longueurs des deux brins tendus BT1 et BT2 soient augmentées tandis que la longueur du brin mou BM sera diminuée de la quantité correspondante à l'allongement des deux brins tendus.

Le fonctionnement du circuit hydraulique est le même que précédemment à savoir que les électro-

vannes EV1, EV2, EV3 travaillent en tout ou rien à l'ouverture et que l'on ralentit le débit de fuite à l'aide des étrangleurs situés en aval de ces électrovannes que sont elles-mêmes réglables de façon à obtenir des positions intermédiaires. Lorsque cette position est obtenue, on bloque le tendeur par fermeture de l'électrovanne.

A la Fig.7, on a représenté un mode de réalisation selon lequel le dispositif comporte trois arbres menés par exemple deux arbres à cames et un arbre de pompe d'injection entraînés par un même vilebrequin à l'aide d'une même chaîne 16. Dans ce dispositif il est également possible de régler le calage angulaire de chaque arbre, de deux arbres ou de trois arbres, indépendamment par rapport au vilebrequin à l'aide de quatre tendeurs T1, T2, T3, T4 disposés respectivement sur le premier brin tendu BT1, sur le brin mou BM sur le brin tendu BT2 et sur le brin tendu BT3.

Le fonctionnement est identique au dispositif présenté à la Fig.6, il reste à prévoir dans un tel dispositif une amplitude du tendeur T1 suffisante pour pouvoir compenser la somme des variations de longueur de chacun des brins tendus.

Dans les différents modes de réalisation représentés, les arbres menés A1, A2 et A3 peuvent être soit des arbres à cames soit des arbres de mise en rotation de pompe à injection.

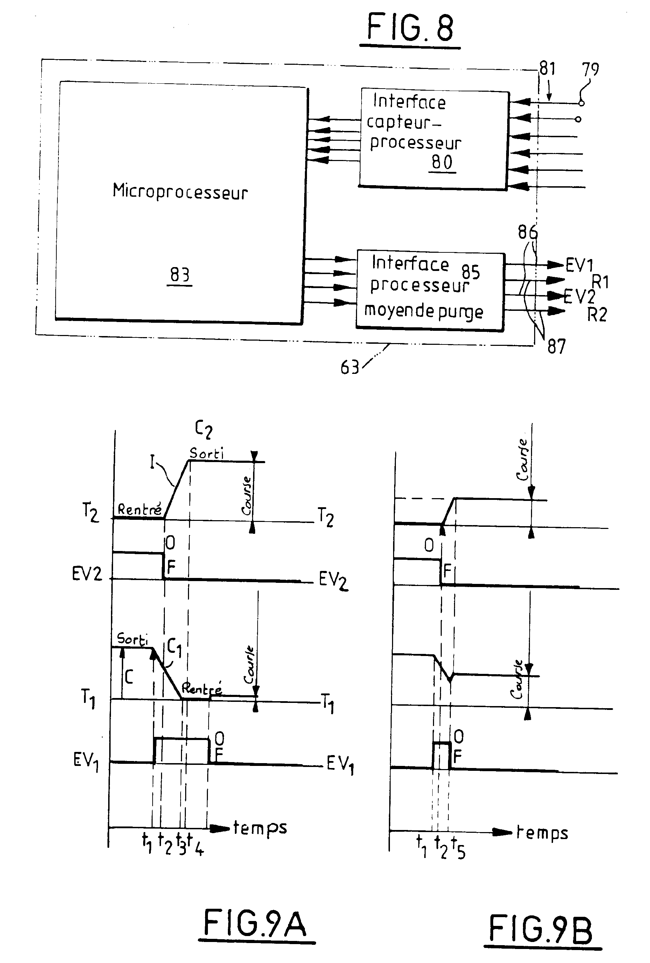

Sur le figure 8 on a représenté schématiquement une unité de commande électronique 63, reliée en entrée à un capteur 79 détectant la vitesse du moteur. D'autres capteurs de paramètre de fonctionnement peuvent être reliés à l'unité 63 comme déjà indiqué.

Les informations 81 émises par le capteur 79 sont reçues dans une interface capteur processeur 80 reliée à un microprocesseur 83 qui à l'aide d'un programme de traitement des informations envoie des signaux à une interface processeur moyens de purge 85. L'interface 85 envoie des signaux de commande 86 et 87 sous forme d'impulsions électriques aux électrovannes EV1 et EV2 et aux étranglements réglables R1 et R2 de deux tendeurs respectifs T1 et T2.

Les signaux 86 commandant les électrovannes EV1 et EV2 entraînent le passage de celles-ci de la position ouverte à la position fermée ou inversement.

Les signaux 87 règlent l'ouverture des étranglements variables R1 et R2.

En se reportant à la figure 9A, on constate que dans l'état initial (temps zéro) l'électrovanne EV1 est fermé et la chambre 42 du tendeur T1 étant sous pression, le piston 40 de celui-ci fait sailie sur une distance appelée course du tendeur que est sorti. Par contre l'électrovanne EV2 est ouverte et la purge ayant eu lieu, le tendeur T2 est rentré (sa course est nulle). On se trouve donc dans la position de la figure 2.

Si à un temps t1 les paramètres indiquent qu'un décalage maximum est nécessaire, l'électrovanne EV1 est ouverte et la course du tendeur T1 diminue selon une partie rectiligne de la courbe correspondante, dont la pente est déterminée par le réglage de l'étranglement variable R1 commandé par l'unité de commande. La course devient nulle au bout d'un temps égal à t3 - t1.

A l'instant t2 situé après t1 et avant t3, l'électrovanne EV2 est fermée ce qui entraîne la mise en pression de la chambre 42 du tendeur T2 et la sortie de celui-ci comme représenté par une partie de droite inclinée sur la courbe correspondante, la pente de cette partie de droite étant fonction de la vitesse de montée en pression de la chambre 42. Il est à noter que le brin mou est à ce moment suffisamment détendu pour permettre au tendeur T2 de sortir. Ainsi l'action sur l'étranglement R1 est telle que T1 est rentré avant que T2 ne soit totalement sorti (c'est-à-dire que t3 précède t4).

Sur la figure 9B on a représenté l'action de l'unité de commande 63 de la figure 8, cette action étant interrompue avant le temps t3. Dans ce cas l'interruption est effectuée à l'instant t'5 qui intervient après t2 mais avant le temps t3 de la figure 9A qui correspond à la rentrée complète du tendeur T1. Dans ce cas les courses des tendeurs T1 et T2 sont toutes deux intermédiaires entre la position rentrée ou la position sortie et établissent un décalage intermédiaire entre le décalage initial et le décalage maximum.

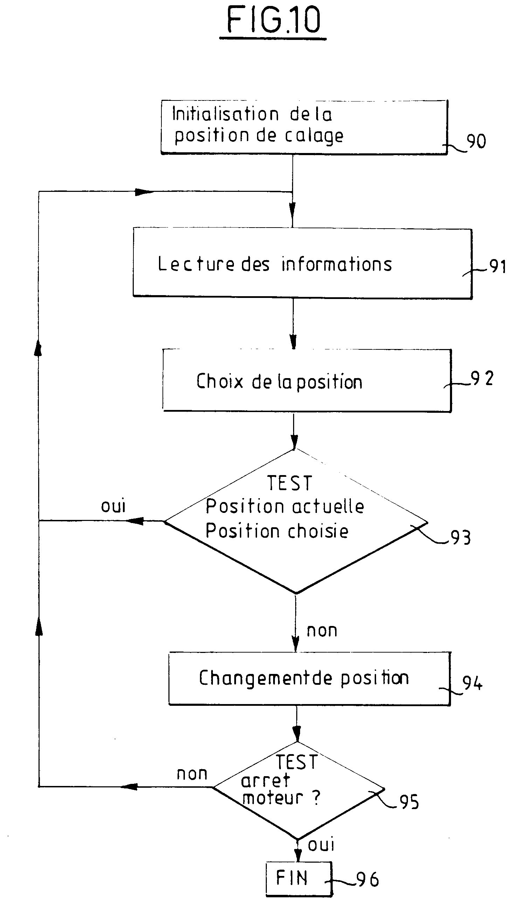

L'organigramme représenté sur la figure 10 permet de constater que le programme inscrit sur le microprocesseur 83 de la figure 8 comporte :

- une étape 90 d'initialisation de la position du calage,
- une étape 91 de lecture des informations données par les capteurs,
- une étape 92 de choix de la position en fonction des informations fournies par les capteurs,
- une étape 93 de test qui compare la position actuelle avec la position choisie. Dans le cas où ces deux positions correspondent les informations données par le capteur sont bouclées vers la phase 91. Si les deux positions ne correspondent pas le programme passe à l'étape suivante,
- une étape 94 de changement de position du calage,
- une étape 95 de test arrêt moteur. Dans cette étape le programme vérifie si le moteur est arrêté. Lorsque le moteur n'est pas arrêté le programme est bouclé vers l'étape 91. Dans le cas où le moteur est arrêté le programme passe à l'étape suivante, c'est-à-dire,
- une étape 96 de fin de programme.

L'invention qui vient d'être décrite utilise une chaîne engrènant sur des pignons mais l'invention est également applicable aux dispositif qui utilisent des courroies dentées et des poulies dentées tout comme aux dispositifs qui utilisent des courroies lisses et des poulies lisses à condition qu'il n'y ait aucun glissement entre les courroies et les poulies.

## Revendications

1. Dispositif d'entraînement d'au moins un arbre mené (A1), à partir d'un arbre menant (V), comprenant un lien de transmission à boucle fermée de longueur constante délimitant un brin mou (BM) sur lequel agit un premier tendeur et au moins un brin tendu (BT) sur lequel agit un tendeur hydraulique, caractérisé en ce que le tendeur hydraulique comporte un clapet anti-retour (54), une chambre (42) alimentée en continu par un fluide sous pression, le clapet (54) étant situé entre l'alimentation et l'entrée de la chambre, des moyens de purge comportant une électrovanne en aval d'une sortie de la chambre et en amont d'un réservoir de purge, et des moyens de commande de l'électrovanne.

2. Dispositif selon la revendication 1, caractérisé en ce que les moyens de purge comportent un étranglement variable (R) situé en aval de l'électrovanne et en amont du réservoir de purge (62).

3. Dispositif selon la revendication 1 ou 2, caractérisé en ce que les moyens de commande l'électrovanne comportent une unité de commande séquentielle reliée à l'électrovanne associée à chaque tendeur hydraulique de brin tendu pour faire varier le calage angulaire d'un arbre mené par rapport à l'arbre menant, l'unité de commande comportant une entrée (80) reliée à des capteurs (79) de paramètres de fonctionnement du moteur, un microprocesseur (83) et une sortie (85) émettant des signaux de commande aux moyens de purge.

4. Dispositif selon la revendication 3, caractérisé en ce que l'unité de commande envoie de manière séquentielle des signaux de commande aux moyens de purge, qui ouvrent tout d'abord l'électrovanne (EV1) du/des brins à raccourcir puis en fermant l'électrovanne (EV2) du/des brins à allonger puis en refermant les électro-vannes précédemment ouvertes pour bloquer le calage dans la position désirée, et en réglant pendant la séquence d'ouverture le/les étranglements pour régler la vitesse de raccourcissement du/des brins à raccourcir.

5. Dispositif selon la revendication 3, caractérisé en ce que les capteurs reliés à l'unité de commande comprennent des capteurs de couple, vitesse, pression dans la pipe d'admission, température des gaz d'échappement, teneur en oxyde d'azote ou autres.

6. Dispositif selon l'une quelconque des revendications 1 à 5, caractérisé en ce que l'arbre mené (A1) est un arbre à cames ou un arbre d'entrainement en rotation d'une pompe à injection.

7. Dispositif selon l'une quelconque des revendications 1 à 5, caractérisé en ce que le lien en boucle fermée (16) est une chaine à rouleaux coopérant avec des roues dentées portées par les arbres (A).

8. Dispositif selon l'une quelconque des revendications 1 à 6, caractérisé en ce que le lien en boucle fermée de longueur constante est une courroie coopérant avec des poulies.

9. Dispositif selon la revendication 8, caractérisé en ce que la courroie est crantée et les poulies sont crantées.

10. Dispositif selon l'une quelconque des revendications 1 à 9, caractérisé en ce que le fluide sous pression de commande des tendeurs est le lubrifiant sous pression du moteur et la purge s'effectue par retour au carter d'un moteur à explosion ou à combustion interne.

11. Dispositif selon l'une quelconque des revendications 1 à 9, caractérisé en ce que le fluide de pression de commande des tendeurs est un fluide distinct du lubrifiant moteur et la purge s'effectue par retour à un carter indépendant du moteur à explosion ou à combustion interne.

## Patentansprüche

1. Vorrichtung zum Antreiben wenigstens einer angetriebenen Welle (A1), auf Basis einer antreibenden Welle (V), mit einem Übertragungsglied mit geschlossenem Wirkungsweg konstanter Länge, welches einen losen Gurtabschnitt (BM), auf dem ein erstes Spannstück wirkt, und wenigstens einen straffen Gurtabschnitt (BT), auf dem ein Hydraulik-Spannstück wirkt, begrenzt, dadurch gekennzeichnet, daß das Hydraulik-Spannstück ein Rückschlagventil (54), eine Kammer (42), welche kontinuierlich mit einem unter Druck stehenden Fluid gespeist wird, wobei das Ventil (54) zwischen der Quelle und dem Eingang der Kammer angeordnet ist, Auslaßeinrichtungen mit einem Elektroventil stromabwärts eines Auslasses der Kammer und stromaufwärts eines Auslaßbehälters und Steuereinrichtung für das Elektroventil aufweist.

2. Vorrichtung nach Anspruch 1, dadurch gekennzeichnet, daß die Auslaßeinrichtungen eine variable Drosselung (R) aufweisen, die stromabwärts des Elektroventils und stromaufwärts des Auslaßbehälters (62) angeordnet ist.

3. Vorrichtung nach Anspruch 1 oder 2, dadurch gekennzeichnet, daß die Steuereinrichtungen für das Elektroventil eine Ablaufsteuerungseinheit aufweisen, die mit dem Elektroventil verbunden ist, welches jedem Hydraulik-Spannustück für einen straffen Gurtabschnitt zugeordnet ist, um den Differenzwinkel einer angetriebenen Welle in bezug auf die antreibende Welle zu ändern, wobei die Steuereinheit einen mit Aufnehmern (79) für Funktionsparameter des Motors verbundenen Eingang (80), einen Mikroprozessor (83) und einen Ausgang (85) aufweist, der an die Auslaßeinrichtungen Steuersignale aussendet.

4. Vorrichtung nach Anspruch 3, dadurch gekennzeichnet, daß die Steuereinheit sequentiell Steuersignale an die Auslaßeinrichtungen schickt, welche zuallererst das Elektroventil (EV1) des/der zu verkürzenden Gurtabschnittes/Gurtabschnitte öffnen, wobei das Elektroventil (EV2) des/der zu verlängernden Gurtabschnittes/Gurtabschnitte geschlossen wird, wobei dann wieder die zuvor geöffneten Elektroventile geschlossen werden, um die Einstellung in der gewünschten Position zu blockieren, und wobei während der Öffnungssequenz die Drossel/Drosseln zum Regeln der Geschwindigkeit der Verkürzung des/der zu verkürzenden Gurtabschnittes/Gurtabschnitte geregelt werden.

5. Vorrichtung nach Anspruch 3, dadurch gekennzeichnet, daß die mit der Steuereinheit verbundenen Aufnehmer Aufnehmer für Moment, Geschwindigkeit, den Druck in dem Einströmrohr, die Temperatur des ausströmenden Gases, den Gehalt an Stickoxid oder andere sind.

6. Vorrichtung nach einem der Ansprüche 1 bis 5, dadurch gekennzeichnet, daß die angetriebene Welle (A1) eine Steuerwelle oder eine Welle zum Drehantreiben einer Einspritzpumpe ist.

7. Vorrichtung nach einem der Ansprüche 1 bis 5, dadurch gekennzeichnet, daß das Element mit geschlossenem Wirkungsweg (16) eine Rollenkette ist, die mit von den Wellen (A) getragenen Zahnrädern zusammenwirkt.

8. Vorrichtung nach einem der Ansprüche 1 bis 6, dadurch gekennzeichnet, daß das Element mit geschlossenem Wirkungsweg konstanter Länge ein Treibriemen ist, welcher mit Riemen scheiben zusammenwirkt.

9. Vorrichtung nach Anspruch 8, dadurch gekennzeichnet, daß der Triebriemen gezahnt ist und die Riemenscheiben gezahnt sind.

10. Vorrichtung nach einem der Ansprüche 1 bis 9, dadurch gekennzeichnet, daß das unter Druck stehende Fluid zum Steuern der Spannstücke unter Druck stehendes Schmiermittel des Motors ist und der Auslaß zurück in das Gehäuse eines Explosionsmotors oder eines solchen mit innerer Verbrennung stattfindet.

11. Vorrichtung nach einem der Ansprüche 1 bis 9, dadurch gekennzeichnet, daß das unter Druck stehende Fluid zum Steuer der Spannstücke ein Fluid verschieden vom Schmiermittel des Motors ist und des Auslaß zurück in ein Gehäuse unabhängig vom Explosionsmotor oder dem mit innerer Verbrennung stattfindet.

## Claims

1. Device for driving at least one driven shaft (A1) from a drive shaft (V), comprising an endless transmission link of constant length delimiting a slack side (BM) on which a first tensioner acts and at least one tight side (BT) on which a hydraulic tensioner acts, characterised by the fact that the hydraulic tensioner comprises a non-return valve (54), a chamber (42) continuously fed with a fluid under pressure, the valve (54) being situated between the feed and the inlet to the chamber, a bleed system comprising an electrically operated gate below an outlet from the chamber and above a bleed tank, and a control system for the electrically operated gate.

2. Device according to claim 1, characterised by the fact that the bleed system comprises a variable throttling (R) situated below the electrically operated gate and above the bleed tank (62).

3. Device according to claim 1 or 2, characterised by the fact that the control system for the electrically operated gate comprises a sequential control unit linked with the electrically operated gate associated with each tight side hydraulic tensioner in order to vary the angular setting of a driven shaft in relation to the drive shaft, the control unit comprising an input (80) linked to sensors of engine operating parameters, a microprocessor (63) and an output (85) transmitting control signals to the bleed system.

4. Device according to claim 3, characterised by the fact that the control unit sends control signals sequentially to the bleed system, which first opens the electrically operated gate (EV1) of the section(s) to be shortened, then closing the electrically operated gate of the sections to be lengthened and then reclosing the electrically operated gates previously opened in order to lock the setting in the desired position, and adjusting the throttling(s) during the sequence of opening in order to control the rate of shortening of the section(s) to be shortened.

5. Device according to claim 3, characterised by the fact that the sensors linked to the control unit comprise sensors of torque, speed, inlet pipe pressure, exhaust gas temperature, nitrous oxide or other contents.

6. Device according to any one of claims 1 to 5, characterised by the fact that the driven shaft (A1) is a cam shaft or a rotary drive shaft for an injection pump.

7. Device according to any one of claims 1 to 5, characterised by the fact that the endless link is a roller chain working in conjunction with sprocket wheels carried by the shafts (A).

8. Device according to any one of claims 1 to 6, characterised by the fact that the endless link of constant length is a belt working in conjunction with pulleys.

9. Device according to claim 8, characterised by the fact that the belt is notched and the pulleys are notched.

10. Device according to any one of claims 1 to 9, characterised by the fact that the fluid under pressure for controlling the tensioners is the lubricant under pressure for the motor and bleeding is carried out by return of it to the crankcase of an explosion or internal combustion engine.

11. Device according to any one of claims 1 to 9, characterised by the fact that the fluid under pressure for controlling the tensioners is a different fluid from the motor lubricant and bleeding is carried out by return to a casing independent of the explosion or internal combustion engine.

FIG.1

FIG.2

FIG.3

FIG.4B

FIG.4A

FIG.5

FIG.7

FIG.6

# FIG. 8

# FIG.9A

# FIG.9B

# FIG.10

```
┌─────────────────────────┐
│  Initialisation de la    │
│  position de calage      │──90
└─────────────────────────┘
           │
           ▼
┌─────────────────────────┐
│  Lecture des informations│──91
└─────────────────────────┘
           │
           ▼
┌─────────────────────────┐
│  Choix de la position    │──92
└─────────────────────────┘
           │
           ▼
        ╱TEST╲
  oui  ╱Position actuelle╲
◄──────╲Position choisie ╱──93
        ╲       ╱
           │ non
           ▼
┌─────────────────────────┐
│  Changement de position  │──94
└─────────────────────────┘
           │
           ▼
        ╱ TEST ╲
  non  ╱ arret  ╲
◄──────╲ moteur ?╱──95
        ╲      ╱
           │ oui
           ▼
        ┌──────┐
        │ FIN  │──96
        └──────┘
```